Europäisches Patentamt

European Patent Office

Office européen des brevets

(19)

(11) Numéro de publication: **0 474 649 B1**

(12) **FASCICULE DE BREVET EUROPEEN**

(45) Date de publication de fascicule du brevet: **29.06.94**
(51) Int. Cl.⁵: **C05D 5/00**, C05G 3/00, C01F 5/24

(21) Numéro de dépôt: **90906787.8**

(22) Date de dépôt: **30.05.90**

(86) Numéro de dépôt internationale :
**PCT/BE90/00024**

(87) Numéro de publication internationale :
**WO 90/15037 (13.12.90 90/28)**

Le dossier contient des informations techniques
présentées postérieurement au dépôt de la
demande et ne figurant pas dans le présent
fascicule.

(54) **COMPOSITION POUR LE TRAITEMENT DE VEGETAUX ET UTILISATION DE CELLE-CI.**

(30) Priorité: **31.05.89 BE 8900589**

(43) Date de publication de la demande:
**18.03.92 Bulletin 92/12**

(45) Mention de la délivrance du brevet:
**29.06.94 Bulletin 94/26**

(84) Etats contractants désignés:
**AT BE CH DE DK ES FR GB IT LI LU NL SE**

(56) Documents cités:
| | |
|---|---|
| EP-A- 184 160 | WO-A-84/03490 |
| DE-A- 3 322 253 | DE-A- 3 432 440 |
| DE-A- 3 823 539 | FR-A- 523 593 |
| FR-A- 1 055 421 | FR-A- 1 398 986 |
| GB-A- 1 382 420 | US-A- 3 532 485 |
| US-A- 3 647 411 | |

(73) Titulaire: **LHOIST RECHERCHE ET DEVELOP-
PEMENT S.A.**
**Saint-Jean-des-Bois**
**B-1348 Ottignies-Louvain-La-Neuve(BE)**

(72) Inventeur: **LANGELIN, Henri-René**
**Rue de l'Eglise**
**F-60232 Caffiers(FR)**
Inventeur: **GOFFIN, Robert**
**34, avenue des Croisettes**
**B-4949 Trooz(BE)**

(74) Mandataire: **Vanderperre, Robert et al**
**Bureau Vander Haeghen S.A.**
**Rue Colonel Bourg 108 A**
**B-1040 Bruxelles (BE)**

EP 0 474 649 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Chemical Abstracts, vol. 70, no. 4, 27 January 1969, Columbus, Ohio, USA page 107; ref. no. 13111G see abstract & DD-A-58738 (R. SCHRADER et al.)(20-11-1967)

**EP 0 474 649 B1**

**Description**

La présente invention est relative à un procédé pour le traitement de végétaux chlorophylliens, en particulier, le traitement curatif de végétaux chlorophylliens atteints de carences magnésiennes primaires et le traitement préventif des carences induites par des déséquilibres nutritionnels ou des conditions écophysiologiques. La silviculture, la grande culture, la culture maraîchère et l'horticulture en plein air ou en serres, constituent toutes des secteurs importants d'application du procédé décrit.

L'activité métabolique d'un végétal est tributaire d'un grand nombre de facteurs dont les plus importants sont les facteurs du milieu, notamment le climat et l'alimentation minérale (N, P, K, etc..). Pour apprécier l'effet d'un facteur sur cette activité, il est indispensable d'une part de maîtriser tous les autres facteurs en les maintenant constants (notamment la lumière, l'humidité et la température), et d'autre part, il faut disposer d'un certain nombre de techniques appropriées permettant d'apprécier cette activité d'une manière rapide et non destructive. Maintenir constantes à la fois la lumière, la température et l'alimentation minérale est irréalisable en plein champs, d'où la nécessité d'effectuer ces cultures en conditions contrôlées, par exemple dans une chambre de culture thermostatisée où tous les facteurs sont maintenus constants. Une série de tests physiologiques rapides in vivo, basés sur l'activité photosynthétique des plantes, a été développée ces dernières années pour déterminer leur état de "santé". Ces tests ont permis de préciser le rôle du magnésium dans l'activité d'une plante.

On sait que la solution du sol présente une concentration généralement plus élevée en ion $Mg^{2+}$ qu'en ion $K^+$. La faible capacité des racines à absorber l'ion $Mg^{2+}$ n'est pas liée exclusivement à l'appareil racinaire. Elle est vraie pour d'autres parties de la plante. Une hypothèse qui explique la faible capacité des plantes à absorber l'ion $Mg^{2+}$ est développée dans l'article "The influence of certain experimental parameters on the flux characteristics of $Mg^{2+}$ in the case of barley seedings grown in hydroculture", par C. Schimansky (Landw. Forsch, Vol 34, 1982, pages 154 à 165).

Il s'agirait d'un mécanisme particulier du transport de l'ion $Mg^{2+}$ à travers la membrane plasmique des cellules. Ce transport serait passif, modulé par des ionophores où l'ion $Mg^{2+}$ suivrait le gradient électrochimique. La compétition ionique défavoriserait l'absorption de l'ion $Mg^{2+}$ au profit d'autres cations en excès notamment le cation $K^+$ et le cation $NH_4^+$, jusqu'à entraîner une déficience en ion $Mg^{2+}$ dans la plante. Non seulement l'absorption mais aussi la translocation des cations $Mg^{2+}$ des racines vers les parties aériennes de la plante seraient limitées par la compétition ionique de l'ion $K^+$ ou l'ion $Ca^{2+}$. Par contre les anions $NO_3^-$ auraient une influence positive sur l'absorption de l'ion $Mg^{2+}$.

Un article de H. Grimme et al, intitulé "Potassium, calcium and magnesium interractions as related to cation uptake and yield", (Landw. Forsch., 30/11, 1974, Sonderh. 93-100), démontre qu'on peut obtenir une forte concentration en ion $Mg^{2+}$ dans la plante avec une faible alimentation en ion $K^+$. GRIMME a montré aussi que la diminution du pH du sol entraîne une solubilisation importante d'ions aluminium qui, à son tour, entraîne une diminution de l'absorption d'ions $Mg^{2+}$. L'antagonisme cationique entre l'ion $Mg^{2+}$ et l'ion $K^+$ est, en cas d'alimentation abondante en ions $K^+$, cause d'une diminution du contenu des racines et des feuilles en ions $Mg^{2+}$. Mais dans les fruits et les tissus de réserves, on constate au contraire une accumulation importante des ions $Mg^{2+}$ malgré une forte alimentation en ion $K^+$. L'ion $Mg^{2+}$ est beaucoup plus mobile dans le phloème et peut être facilement transloqué des feuilles âgées vers les jeunes feuilles, l'apex ou les organes de réserve de la plante.

Le rôle biochimique du magnésium dans la plante est décrit dans "Chloroplast and cell- The movement of certain key substances accross the chloroplast envelope" par Walker D.A. (INT. REVIEW OF SCIENCE, PLANT BIOCH., BUTTERWORTHS, Series I, Vol II, 1974, p. 1-49).

On y relate qu'une grande proportion, environ 70 %, du magnésium total d'une plante se trouve sous une forme diffusible associée aux anions inorganiques et aux anions d'acides organiques tels que le malate et le citrate.

Le rôle biochimique le plus important et le plus connu du magnésium dans les plantes est sa présence au centre de la molécule de chlorophylle. Néanmoins, la fraction de magnésium associée à ce rôle ne représente que 15 à 20 % du total de magnésium présent dans le végétal.

La fonction de cofacteur de nombreuses réactions enzymatiques fondamentales fait du magnésium un élément très important dans la plante : il participe dans le processus de phosphorylation où il forme un pont entre la forme pyrophosphate de l'ATP ou l'ADP et la molécule d'enzyme, ce qui entraîne l'activation de l'ATPase. D'autres enzymes telles que la déshydrogénase et l'énolase sont aussi activées par l'ion $Mg^{2+}$. Une autre fonction clé du magnésium est l'activation de la ribulose-diphosphate-carboxylase. L'éclairement de la feuille entraîne une entrée massive de l'ion $Mg^{2+}$ dans le stroma en échange de protons ($H^+$), ce qui crée les conditions optimum pour l'activité de la carboxylase. Cet effet favorable de l'ion $Mg^{2+}$ dans l'assimilation du $CO_2$ et la production de sucres qui lui est associée est probablement la conséquence de

3

l'activation de la ribulose-diphosphate-carboxylase.

D'après l'article "Influence of surface charges on thylakoîde structure and function"par J. Barber, (ANN. REV. PLANT PHYSIOL. 33, 1982), le cation $Mg^{2+}$ est le cation le plus important dans la neutralisation des anions diffusibles dans les membranes thylacoîdiennes. Généralement, lorsqu'une plante est carencée en magnésium la proportion d'azote sous forme protéîque diminue et la forme non protéîque augmente. La déficience protéique est probablement causée par la dissociation des ribosomes sous forme de sous unités en l'absence d'ion $Mg^{2+}$. Le magnésium apparaît comme un stabilisateur des ribosomes dans la configuration nécessaire à la synthèse protéîque.

Les symptômes de déficience en magnésium diffèrent suivant l'espèce végétale, mais certaines caractéristiques générales sont les mêmes. Une carence magnésienne se manifeste d'abord sur les feuilles âgées, les symptômes gagnant par la suite dans les jeunes feuilles. Généralement, le limbe prend une couleur jaune jusqu'à la nécrose alors que les nervures restent vertes.

Récemment des tests quantitatifs ont été mis au point pour déterminer l'activité photosynthétique d'une plante. La photosynthèse est le fondement du métabolisme de la plante par le rôle primordial qu'elle joue dans la conversion de l'énergie lumineuse en énergie chimique utilisable par tous les processus métaboliques et de synthèse. Elle est une opération complexe où l'on distingue deux sortes de réactions. Les unes, dites réactions claires, car elles sont directement dépendantes de la lumière, assurent l'acte photochimique, par lequel l'énergie lumineuse est convertie en métabolites, point de départ des synthèses carbonées et sources d'énergie chimique. Les autres, dites réactions sombres, encadrent l'acte photochimique, lui fournissant les métabolites de départ et le prolongent vers les synthèses ou la reconstitution des précurseurs. L'acte photochimique n'est possible que par l'intervention des pigments assimilateurs.

Il existe deux systèmes photorécepteurs, l'un fonctionnant dans le rouge sur des longueurs d'ondes relativement basses (vers 680 nm) appelé PS2, l'autre sur des longueurs d'ondes plus élevées (700 nm) est appelé PS1. Ces deux photosystèmes sont reliés par une chaîne de transfert d'électrons constituée de quinones, de plastoquinones et de cytochromes.

Les pigments des feuilles des végétaux (chlorophylles et caroténoîdes) absorbent la lumière dont l'énergie est utilisée dans les réactions photochimiques primaires de la photosynthèse. Une partie de l'énergie lumineuse absorbée est toutefois dissipée sous forme de chaleur (environ 80 %) ou réémise sous forme de fluorescence (environ 2 à 3 %).

Cette réémission qui constitue la fluorescence chlorophyllienne est effectuée à des longueurs d'ondes supérieures à celle du spectre d'absorption des chlorophylles. La mesure de la fluorescence de la chlorophylle qui, aux températures physiologiques provient essentiellement du système PS2, fournit de précieux renseignements sur le fonctionnement de l'appareil photochimique des chloroplastes. Voir à ce sujet "Chlorophyll a fluorescence of higher plants : chloroplasts and leaves" par Briantais et al, cité par Govindjee et al dans "Light emission by plants and bacteria", (ACADEMIC PRESS, N.Y., p. 539-584).

En effet, lorsqu'une feuille est adaptée à l'obscurité et ensuite ramenée à la lumière, le rendement de la fluorescence chlorophylienne varie suivant une cinétique relativement complexe (augmentation rapide de l'intensité de la fluorescence suivie d'une diminution lente vers un état stationnaire) due à l'activation progressive des mécanismes photosynthétiques (ce phénomène d'induction de la fluorescence est appelé "effet Kautsky"). Cette fluorescence observable uniquement dans les tissus photosynthétiquement actifs, dépend de divers processus photochimiques qui peuvent être étudiés indirectement, par exemple l'état redox des accepteurs primaires d'électrons du système photorécepteur du système PS2, l'établissement du gradient de pH photoinduit dans les chloroplastes (entrée massive de l'ion $Mg^{2+}$ dans le stroma en échange de protons), etc. Lorsque l'état fonctionnel des membranes photosynthétiques se dégrade sous l'effet de certaines contraintes défavorables du milieu comme la chaleur, le froid ou l'alimentation minérale par exemple, l'altération des processus photosynthétiques se reflète dans les courbes d'induction de la fluorescence de la chlorophylle. On a donc suggéré d'utiliser certains paramètres, déterminés à partir des courbes de fluorescence, pour détecter les conditions de "stress" des plantes.

L'invention concerne un procédé de traitement de végétaux chlorophylliens. Ce procédé est caractérisé en ce qu'on met en contact des parties foliées de végétaux avec une solution aqueuse de carbonate acide de magnésium, en vue de stimuler et/ou rénover l'activité photosynthétique desdits végétaux.

Suivant un mode particulier de mise en oeuvre de l'invention, on traite des végétaux par pulvérisation à l'aide d'une solution aqueuse de carbonate acide de magnésium. Il faut veiller à ce que la solution aqueuse de carbonate acide de magnésium soit suffisamment diluée, c'est-à-dire qu'elle contienne moins de 80 g/l, de préférence environ 20 g/l de carbonate acide de magnésium.

Le procédé de traitement de végétaux est encore plus efficace lorsque la composition contient également au moins un oligoélément choisi parmi le manganèse, le cuivre, le zinc, le bore, le molybdène et le fer.

4

Ce ou ces oligoéléments sont ajoutés généralement sous forme de carbonates, sulfates, nitrates ou chlorures.

Dans un mode de mise en oeuvre particulier du procédé, on ajoute du sulfate de cuivre ou du chlorure de fer ferreux.

Le traitement selon l'invention accélère le processus photosynthétique de tous les végétaux, tant ligneux que herbacés. Il active la photosynthèse de végétaux chlorophylliens et combat leurs carences magnésiennes.

On ajoute avantageusement des produits tensioactifs à la solution pour améliorer la pénétration d'un ou de composés par les feuilles ou les aiguilles desdits végétaux.

Des tests ont permis de découvrir qu'une composition préparée extemporanément à partir d'une solution aqueuse de carbonate acide de magnésium $Mg(HCO_3)_2$, peut être utilisée comme activateur et/ou rénovateur de l'activité photosynthétique des végétaux chlorophylliens.

Suivant une particularité de l'invention, l'utilisation de la composition susdite comme activateur et/ou rénovateur de l'activité photosynthétique s'effectue par contact sur les feuilles. A cet effet, la composition contient moins de 80 g/l, de préférence environ 20 g/l de carbonate acide de magnésium.

La composition susdite peut être également utilisée pour le traitement de végétaux atteints de carence magnésienne ou comme agent de fertilisation magnésienne de complément.

L'invention concerne également un procédé pour préparer une composition pour le traitement de végétaux, contenant une solution aqueuse de carbonate acide de magnésium de formule $Mg(HCO_3)_2$, selon lequel on met en suspension dans de l'eau dans un réacteur, de l'oxyde de magnésium pur artificiel, de grande réactivité, préparé par calcination d'hydromagnésite à environ 600°C ou par calcination d'hydroxyde de magnésium à environ 450°C, comme décrit dans un ouvrage de Paul PASCAL, "Nouveau traité de chimie minérale" tome IV, 1958, Ed. MASSON et Cie, Paris, pages 162 et 234, et l'on traite la suspension ainsi obtenue avec de l'anhydride carbonique gazeux, à une température inférieure à 40°C et sous une pression en anhydride carbonique supérieure à $5.10^5$ Pa (5 bars). Le procédé est caractérisé en ce qu'on dilue le produit de réaction dans de l'eau, de manière à obtenir une solution contenant moins de 80 g/l de carbonate acide de magnésium, avant de détendre la solution à la pression atmosphérique. Il est avantageux, au moment de l'utilisation, de diluer la solution filtrée jusqu'à moins de 80 g/l de $Mg(HCO_3)_2$ dissous avant de détendre la solution à la pression atmosphérique pour obtenir une solution aqueuse prête à l'emploi, et de préférence jusqu'à environ 20 g/l de $Mg(HCO_3)_2$ dissous.

Dans un mode de réalisation particulier, on refroidit et maintient la température de l'eau et de la solution à une température comprise entre 0 et 10°C sous une pression de 5 à 6 bars en vue d'atteindre une concentration de 80 g/l de $Mg(HCO_3)_2$, et assurer la stabilité de la solution jusqu'au moment de son utilisation.

Suivant une particularité de l'invention, on effectue la préparation de la solution concentrée de $Mg(HCO_3)_2$ dans une unité mobile proche des zones de pulvérisation de la solution diluée de $Mg(HCO_3)_2$.

A cet effet, on met en oeuvre un appareillage pour la préparation d'une composition pour le traitement de végétaux suivant l'invention, comprenant :

- une cuve dans laquelle de l'oxyde de magnésium pur artificiel est dispersé dans de l'eau;
- un réservoir d'anhydride carbonique sous une pression supérieure à $10.10^5$ Pa (10 bars), de préférence à $20.10^5$ Pa (20 bars);
- un réacteur principal muni d'un moyen destiné à l'absorption de l'anhydride carbonique et la transformation de l'oxyde de magnésium en carbonate acide de magnésium, et
- des conduits destinés à amener l'oxyde de magnésium en suspension de la cuve au réacteur principal et l'anhydride carbonique du réservoir au réacteur principal. Cet appareillage se distingue des appareillages connus, par le fait qu'il est fixé sur un support mobile en vue de permettre la préparation extemporanée de la solution de $Mg(HCO_3)_2$ sur les lieux proches des zones de pulvérisation de la solution diluée de $Mg(HCO_3)_2$.

D'autres particularités et détails de l'invention apparaîtront dans la description détaillée suivante faisant référence aux figures ci-annexées.

- la figure 1 montre la cinétique en fonction du temps de la composante photochimique de la fluorescence chlorophyllienne (qQ) dans une feuille non stressée de blé dur;
- la figure 2 montre l'évolution de la composante photochimique (qQ) de l'extinction de la fluorescence chlorophylienne lors de l'induction de lumière, sur froment d'hiver, après application du $Mg(HCO_3)_2$;
- la figure 3 montre l'évolution de la composante énergétique (qE) de l'extinction de la fluorescence chlorophylienne lors de l'induction de lumière, sur froment d'hiver, après application du $Mg(HCO_3)_2$;
- la figure 4 montre la structure spatiale des constituants d'un appareil photosynthétioue dans des membranes,

- la figure 5 représente l'évolution du rendement quantique (rQ) de la photosynthèse sur maîs au stade 6 feuilles, après différents traitements expérimentaux;
- la figure 6 représente l'évolution de la composante photochimique de l'extinction de la fluorescence chlorophyllienne (qQ) immédiatement après l'induction de lumière, sur mais au stade 6 feuilles, après application des mêmes traitements expérimentaux;
- la figure 7 représente l'évolution de la composante photochimique de l'extinction de la fluorescence chlorophyllienne modulée (qQ relatif) au cours du temps;
- la figure 8 illustre l'évolution de la composante photochimique de l'extinction de la fluorescence de la chlorophylle lors de l'induction (qQ rel.), 0, 1, 4 et 150 jours après la pulvérisation d'une solution de $Mg(HCO_3)_2$ sur épicéa traité comparé à celle d'un épicéa témoin laissant apparaître des symptômes de dépérissement;
- la figure 9 montre l'évolution du rendement des racines de la betterave sucrière (T/ha) en fonction de l'application de doses croissantes de carbonate acide de magnésium;
- la figure 10 montre l'évolution du rendement en sucre (kg/ha) des betteraves sucrières traitées à l'aide de $Mg(HCO_3)_2$ en fonction de l'application de doses croissantes de $Mg(HCO_3)_2$;
- la figure 11 montre schématiquement une unité mobile de production extemporanée de carbonate acide de magnésium;

Dans ces figures, les mêmes signes de référence désignent des éléments identiques ou analogues.

Le carbonate acide de magnésium est un produit intermédiaire, soluble dans l'eau, formé au cours de la fabrication de carbonate de magnésium basique selon le procédé PATTINSON, (voir GB-A-9102) ou un procédé analogue qui en dérive (voir WO-A-84 03 490).

Le procédé PATTINSON met en oeuvre comme matière de départ de la dolomie ou de la magnésite contaminée d'oxyde de calcium. En vue d'éliminer la chaux, on dissous par carbonatation le magnésium sous forme de carbonate acide de magnésium qu'on soumet à une filtration sous pression afin de retenir le carbonate de calcium insoluble. Après filtration, la solution de carbonate acide de magnésium sous pression de $CO_2$ est détendue.

Le procédé décrit dans le document WO-A-84 03 490 met en oeuvre comme matière de départ de la magnésite contaminée de fer. Comme dans le procédé PATTINSON, la magnésite de départ est traitée par carbonatation en solution aqueuse en vue de transformer le magnésium en carbonate acide de magnésium soluble dans l'eau sous pression de $CO_2$ et le fer en carbonate de fer ferreux insoluble. L'élimination du composé insoluble est effectuée par filtration sous pression de $CO_2$. Après filtration, la solution de carbonate de magnésium, débarrassée du fer est détendue.

Dès qu'on détend à la pression atmosphérique une solution de carbonate acide de magnésium sous pression, $5.10^5$ à $10.10^5$ pascals, à une température inférieure à 40°C, il se forme un précipité de carbonate de magnésium basique de formule $(MgCO_3)_4 . Mg(OH)_2 . 4H_2O$ pour lequel on ne connaît aucune propriété particulière en physiologie végétale.

Selon l'invention, on a d'abord dilué la solution de carbonate acide de magnésium, avant de la détendre a la pression atmosphérique, afin d'assurer la stabilité chimique du carbonate acide de magnésium et éviter sa transformation en carbonate basique.

Les propriétés physiologiques particulières d'une solution diluée de carbonate acide de magnésium sont mises en lumière par les essais comparatifs suivants :

## I. ESSAIS COMPARATIFS EN SERRES

Au cours d'essais comparatifs, deux espèces herbacées (orge et maïs) ont été soumises à deux régimes alimentaires, l'un normal (c'est-à-dire avec magnésium) et l'autre sans magnésium. Les dégressions de l'activité photosynthétique de plantes-témoins normales et de plantes carencées en magnésium ont été suivies au cours des essais par la mesure de l'extinction de la fluorescence chlorophyllienne (qQ) et le rendement quantique (rQ).

Ces mêmes tests ont été réalisés en parallèle sur une espèce ligneuse : l'épicéa (provenant de forêts atteintes de symptômes de dépérissement et manifestant des carences magnésiennes).

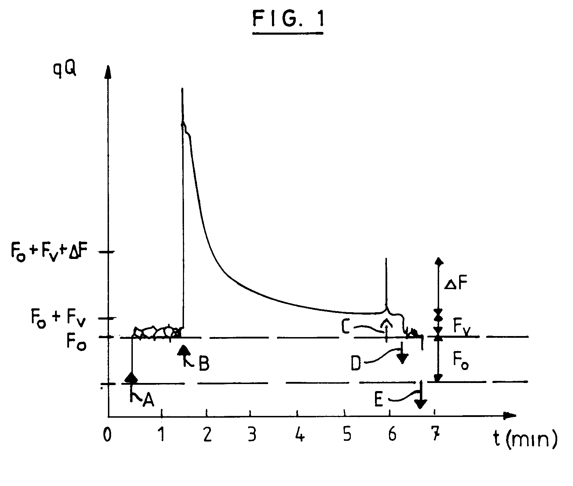

La composante photochimique de la fluorescence de la chlorophylle (qQ) est déterminée au moyen d'un fluorimètre PAM 101-102-103 construit par la firme Waltz (Effeltrich, RFA) mettant en oeuvre une fluorescence modulée et une fluorescence induite. Un exemple de courbe de fluorescence mesurée au moyen de ce fluorimètre est présentée à la fig. 1. La fluorescence modulée est obtenue par de courtes impulsions de lumière rouge ($1\mu s$) appliquées à une fréquence de 1.6 kHz. Une lumière d'excitation (A), de très faible intensité (valeur intégrée = 0.5 $\mu E/m^2/sec$) de telle sorte qu'aucun phénomène d'induction n'est initié est produite par une diode émettrice de lumière (650 nm). Cette lumière d'excitation (A) permet de mesurer le niveau initial de la fluorescence $F_o$. L'induction de la fluorescence chlorophyllienne est provoquée par une seconde lumière, blanche (B), non modulée et de plus forte intensité (800 $\mu$E/m²/sec) produite par une lampe halogène de 150 W (Osram Xenoplot HLX). L'induction est mesurée avec une fréquence de 110 kHz de manière à réduire fortement le bruit de fond parasite et à augmenter sensiblement le temps de réponse de l'appareil. Le niveau maximum de la fluorescence de la chlorophylle est déterminé par l'adjonction d'un éclair (1s) de lumière blanche (C) de très forte intensité, saturante pour le transfert d'électrons (8000 $\mu$E/m²/sec). Dans cette étude, les mesures sont réalisées à la température ambiante (25°C). La méthode de calcul utilisée pour estimer la composante photochimique de l'extinction de la fluorescence, à partir du niveau initial, stationnaire et maximum de la fluorescence est expliquée par la figure 1. Toutes les densités de flux de photons sont mesurées à l'aide d'un radiomètre Li-Cor 188 B.

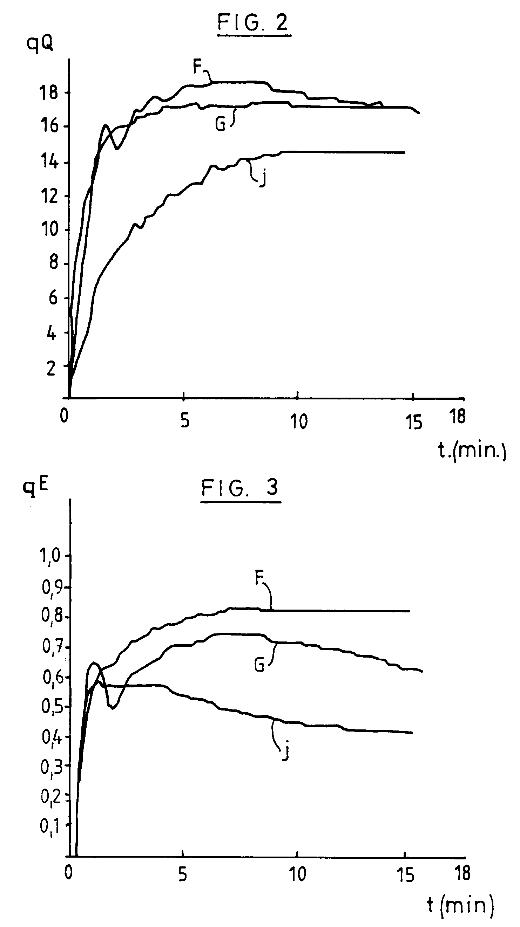

Le rendement quantique (rQ) est une mesure de l'efficience de la transformation de l'énergie lumineuse en énergie chimique par la photosynthèse. Il mesure le nombre de moles d'$O_2$ produites (ou de $CO_2$ fixées) par mole quanta de la radiation photosynthétiquement active "PAR" (longueur d'onde comprise entre 400 et 700 nm). La mesure de la production d'$O_2$ a été déterminée sur des disques foliaires par une électrode de Clark du type Hansatech LD2. Le résultat des mesures est représenté graphiquement aux figures 2 et 3. L'allure descendante de la courbe révèle la diminution de la fluorescence de la chlorophylle dans une feuille (non stressée) de blé dur (var. Clairdoc). Une feuille de la plante, après avoir été adaptée à l'obscurité, a d'abord été illuminée avec une très faible lumière modulée A, de manière à déterminer le niveau 0 de la fluorescence ($F_o$). La fluorescence variable ($F_v$) a été induite au moyen d'une seconde lumière (non modulée et de plus forte intensité),allumée en B et éteinte en C. L'adjonction d'un éclair de lumière saturante C a induit une augmentation de la fluorescence ($\Delta$ F) jusqu'au niveau maximum. A partir des valeurs de $F_o$, $F_v$ et F, on a pu calculer qQ en utilisant la formule suivante :

$$qQ = \Delta F / (\Delta F + F_v)$$

Tableau 1 :

| Résultats des mesures de rendement quantique (rQ) sur des plantes non carencées en magnésium (témoins) et des plantes carencées. Les écarts-types sont mentionnés entre parenthèses. | | |
|---|---|---|
| Plantes | Témoins | Carencées |
| Orge | 0.57 (±0.04) | 0.27 (±0.03) |
| Maïs | 0.55 (±0.07) | 0.22 (±0.02) |
| Epicéa | 0.52 (±0.02) | 0.11 (±0.02) |

Le tableau 1 montre une diminution importante (environ 55 % du témoin) de la production d'$O_2$ chez les plantes carencées en magnésium, ce qui indique une inhibition importante de l'activité photosynthétique due probablement à une altération des processus photochimiques des chloroplastes suite à la déficience en magnésium.

La figure 2 montre l'évolution de la composante photochimique (qQ) de l'extinction de la fluorescence chlorophyllienne lors de l'induction de lumière, au cours du temps sur froment d'hiver, après application du Mg (HCO$_3$)$_2$ sur plantes témoins F, ayant reçu une solution nutritive contenant du magnésium, sur plantes G carencées ayant reçu une solution nutritive exempte de magnésium et sur plantes traitées J ayant reçu une solution nutritive exempte de magnésium mais ayant été traitées par pulvérisation foliaire par une solution aqueuse contenant 20 g/l de carbonate acide de magnésium.

La figure 3 montre l'évolution de la composante énergétique (qE) de l'extinction de fluorescence chlorophyllienne lors de l'induction au bout de six jours de traitement sur froment d'hiver.

Tableau 2 :

| Résultats des mesures d'extinction photochimique de la fluorescence de la chlorophylle (qQ) sur des plantes non carencées en magnésium (témoins) et des plantes carencées. Les écarts-types sont mentionnés entre parenthèses. | | |
|---|---|---|
| Plantes | Témoins | Carencées |
| Orge | 0.91 (±0.08) | 0.57 (±0.13) |
| Maïs | 0.89 (±0.07) | 0.52 (±0.05) |
| Epicéa | 0.92 (±0.05) | 0.51 (±0.08) |

Le tableau 2 indique une forte inhibition de la réoxydation des accepteurs primaires du système photorécepteur PS2. Ces résultats révèlent des changements importants dans l'ultra-structure des chloroplastes. Am agron. 26, 351-362 (1975) CHEVALIER et HUGUET Magnesium deficiency effects on apple trees. Ultrastructural evolution in deficient leaves of apple trees, en étudiant les effets du déficit en magnésium sur l'ultra-structure des chloroplastes des feuilles de pommier ont constaté qu'une alimentation inadéquate en magnésium entraîne une déformation de la structure lamellaire des chloroplastes. Visiblement, le magnésium est un élément stabilisateur des membranes thylacoïdiennes des chloroplastes. Or, cette structure lamellaire est très importante dans l'organisation structurelle de la chaîne de transfert d'électrons.

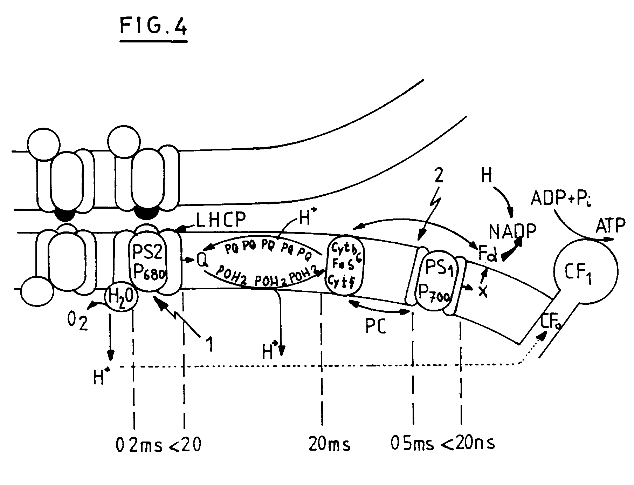

La figure 4 montre l'organisation spatiale des constituants de l'appareil photosynthétique dans les membranes thylacoïdiennes composées de trois types de complexes chloroprotéiniques telles que représentées dans une publication dans la revue "Journal of Biological Chemistry Vol 249, p 6250 à 6254 (1974); PORTIS A.R. MAC CARTY R.E ; Effects of adenine-nucleotides and of phosphorylation of $H^+$ obtained and the magnitude of $H^+$-gradient in illuminated chloroplasts. Ces types de complexes susdits sont :

- le complexe LHCP (Light Harverting Chlorophylle Protein complex);
- le système photorécepteur PS 1, qui est un photosystème caractérisé par le pigment piège P 700;
- le système photorécepteur PS 2, qui est un photosystème caractérisé par le pigment piège P 680.

La jonction entre le PS 2 et le PS 1 est réalisé par une chaîne de transporteurs d'électrons composée de quinones (Q), de plastoquinones (PQ), de cytochromes (Cyt) et de plastocyanines (PC).

La figure 4 montre que les systèmes photorécepteurs PS2 sont confinés dans des zones empilées 1 alors que tous les systèmes photorécepteurs PS1 sont situés dans des zones non empilées 2 des membranes thylacoïdiennes; la désorganisation de cette disposition entraîne donc une inhibition du transfert d'électrons dans la chaîne et donc une inhibition de l'activité photosynthétique de la plante. THOMSON et WEIR (1962) ont constaté chez Phaseolus vulgaris carencé en magnésium, une diminution en nombre des grana et une réduction ou absence totale de leur compartimentation. Ils ont constaté aussi une accumulation de grains d'amidon.

Le maïs et l'orge ont été cultivés dans des pots cylindriques de 25 cm de diamètre et 70 cm de hauteur sur substrat inerte (quartz) et alimentés avec une solution nutritive sans magnésium pour induire la carence et dont la composition est la suivante :

| $Ca(NO_3)_2.4H_2O$ | 23,17 g |
|---|---|
| $KNO_3$ | 12,57 g |
| $K_2HPO_4$ | 9 g |
| $K_2SO_4$ | 4,57 g |
| Oligo-éléments | (chélate de fer<br>(sulfate de cuivre<br>(sulfate de zinc<br>(sulfate de manganèse<br>(acide borique<br>(heptamolybdiate d'ammonium en quantité couvrant les besoins de la culture. |

On a pris vingt-cinq pots, on les a répartis en cinq rangées et on a planté cinq graines de maïs dans chaque pot. La première rangée a été alimentée avec une solution nutritive complète avec magnésium, les quatre autres rangées ont été alimentées avec une solution nutritive sans magnésium.

8

Au stade 6 feuilles, une pulvérisation foliaire a été effectuée:
- avec de l'eau distillée sur la seconde rangée (carence);
- avec une solution de Mg(HCO$_3$)$_2$ à la dose de 8 kg/ha (environ 2 ml/ plante) sur la troisième rangée;
- avec du MgCl$_2$ sur la quatrième rangée; et
- avec du NaHCO$_3$ sur la cinquième rangée.

La première rangée alimentée normalement en magnésium sert de témoin.

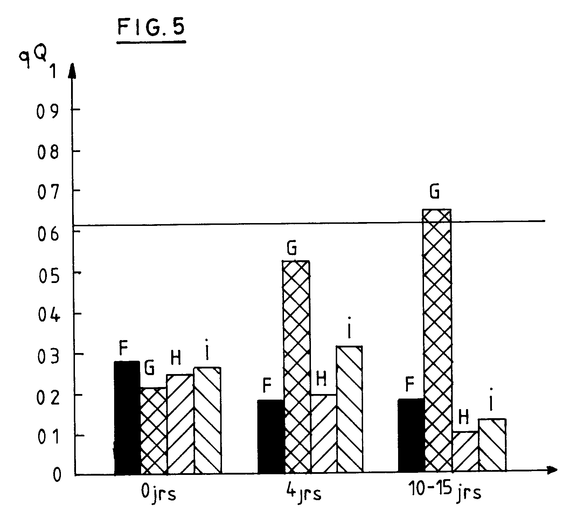

Des mesures du rendement quantique (rQ) et de la fluorescence chlorophyllienne (qQ) ont été effectuées sur quatre rangées de plantes de maîs carencées en magnésium, les premières (F) non traitées, les deuxièmes (G) traitées par pulvérisation foliaire avec une solution contenant 20 g/l de carbonate acide de magnésium, les troisièmes pulvérisées avec une solution de chlorure de magnésium et les quatrièmes pulvérisées avec une solution de bicarbonate de sodium. Les résultats sont ceux mesurés 0, 4 et 10-15 jours après pulvérisation foliaire. La figure 5 illustre l'accroissement du rendement quantique dans l'intervalle de temps.

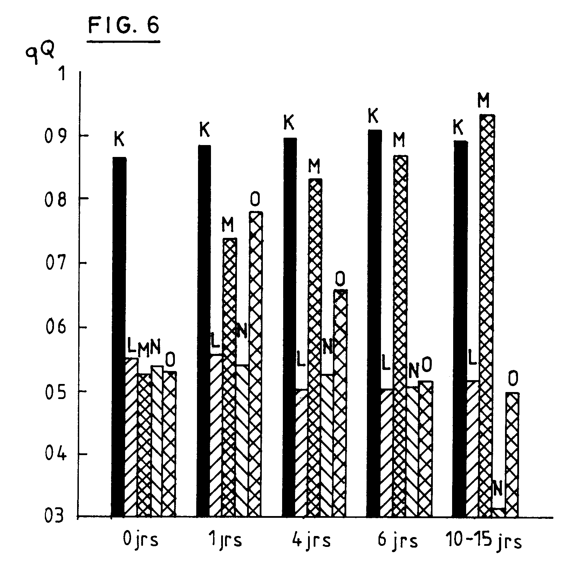

Des mesures de la composante photochimique (qQ) ont été effectuées 0, 1, 4, 6 et 10-15 jours après pulvérisation sur des plantes-témoins non traitées (K) et sur les quatre rangées de plantes de mais carencées en magnésium, les premières (L) non traitées, les deuxièmes (M) traitées par pulvérisation foliaire avec une solution aqueuse contenant 20 g/l de carbonate acide de magnésium, les troisièmes (N) pulvérisées avec une solution aqueuse contenant 20 g/l de chlorure de magnésium et les quatrièmes (O) pulvérisées avec une solution aqueuse de 20 g/l de bicarbonate de sodium (figure 6). Cette figure montre qu'au sixième jour, les plantes traitées avec la solution de Mg(HCO$_3$)$_2$ ont déjà retrouvé une activité photosynthétique voisine de celle des plantes-témoins non carencées et qu'au bout de quinze jours cette activité est même plus importante que celle des plantes-témoins normalement pourvues en magnésium.

Visuellement, et après quatre jours seulement, on constate une disparition spectaculaire des symptômes visibles de la carence en magnésium (disparition des stries jaunes-vertes internervaires) dans les plantes traitées au Mg(HCO$_3$)$_2$. Ceci démontre qu'il y a eu une pénétration extrêmement rapide dans les feuilles traitées, du magnésium sous la forme carbonate acide et un rétablissement de la structure fonctionnelle des chloroplastes. Avec le traitement à l'aide d'une solution aqueuse contenant 20 g/l de chlorure de magnésium MgCl$_2$ on a observé le quatrième jour l'apparition de nécrose sur les feuilles traitées. Le chlorure de magnésium est phytotoxique en pulvérisation foliaire. Avec le traitement au NaHCO$_3$, on remarque pour le rendement quantique une stimulation passagère des plantes traitées durant les premiers jours : ceci est dû uniquement à l'apport intra-foliaire de CO$_2$ libéré par le carbonate acide de sodium.

Libération de CO$_2$ dans la feuille à partir du Mg(HCO$_3$)$_2$.

La technique consiste à enfermer un disque foliaire dans une chambre où le flux d'air circulant est contrôlé. L'oxyde de carbone CO$_2$ de l'air peut être supprimé à l'aide d'une colonne de soude (NaOH) et l'activité photosynthétique est suivie par la mesure de la fluorescence chlorophyllienne (qQ). La suppression du CO$_2$ de l'air entraîne une inhibition de la fixation du CO$_2$, ce qui a pour conséquence une diminution de la fluorescence chlorophylienne.

Trois séries de mesures de qQ ont été effectuées :
- sur des disques foliaires témoins en présence de CO$_2$;
- sur des disques foliaires témoins en absence de CO$_2$; et
- sur des disques foliaires traités par pulvérisation du Mg(HCO$_3$)$_2$ en absence de CO$_2$.

Les disques foliaires ont été découpés dans des feuilles d'orge (au stade 2 feuilles).

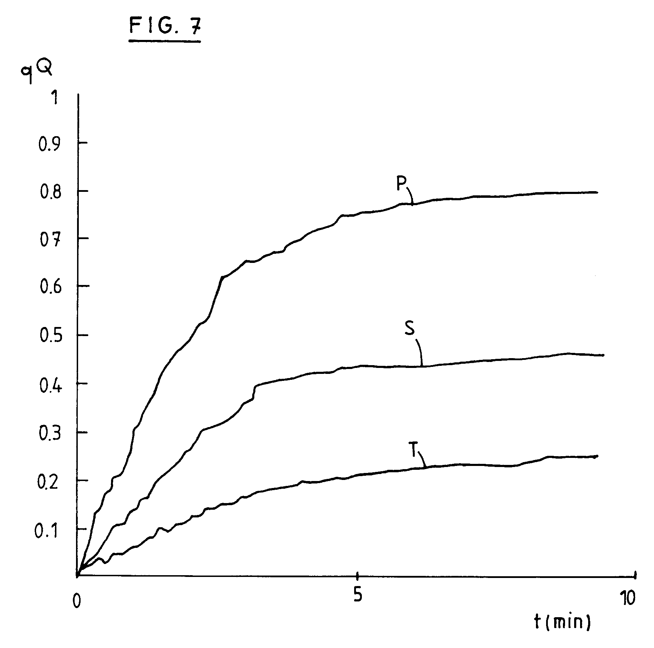

L'évolution de la composante photochimique de l'extinction de la fluorescence de la chlorophylle au cours du temps immédiatement après l'induction de lumière est illustrée à la figure 7. La courbe témoin, (notée P) correspond à un essai au cours duquel l'air circulant dans la chambre n'est pas débarrassé de son CO$_2$. La courbe relative à l'orge traité, (notée T) correspond à un essai au cours duquel l'air est débarrassé de son CO$_2$ grâce à l'absorption de celui-ci sur une colonne de soude.

La figure 7 montre qu'en absence de CO$_2$ dans l'air, la perturbation de la fluorescence chlorophylienne qQ au cours du temps pour les disques traités (courbe S) est beaucoup plus faible que pour les disques témoins (courbe T). La restauration de qQ pour les disques traités (courbe S) ne peut être expliquée que par une libération intra-foliaire de CO$_2$ par le Mg(HCO$_3$)$_2$. Cette libération intra-foliaire de CO$_2$ dans les feuilles jouerait un rôle de coup de fouet pour les plantes carencées et traitées avec Mg(HCO$_3$)$_2$, ce qui permet une accélération du rétablissement de l'activité photosynthétique constatée dans les tests précédents.

Traitement de jeunes épicéas atteints de symptômes de dépérissement attribués à l'action des "pluies acides".

De jeunes individus provenant de pessières atteintes de symptômes de dépérissement et manifestant des signes de carences magnésiennes ont été utilisés pour ce test. Les épicéas ont été rempotés dans le sol où ils ont été prélevés et arrosés à l'eau distillée. La moitié de ces arbres U a été pulvérisée avec une composition selon l'invention à la dose de 8 kg/ha (2 ml/ plante), et l'autre moitié V a servi de témoins. Des mesures de la fluorescence chlorophyllienne (qQ) ont été effectuées 0, 1, 4 et 150 jours après la pulvérisation foliaire.

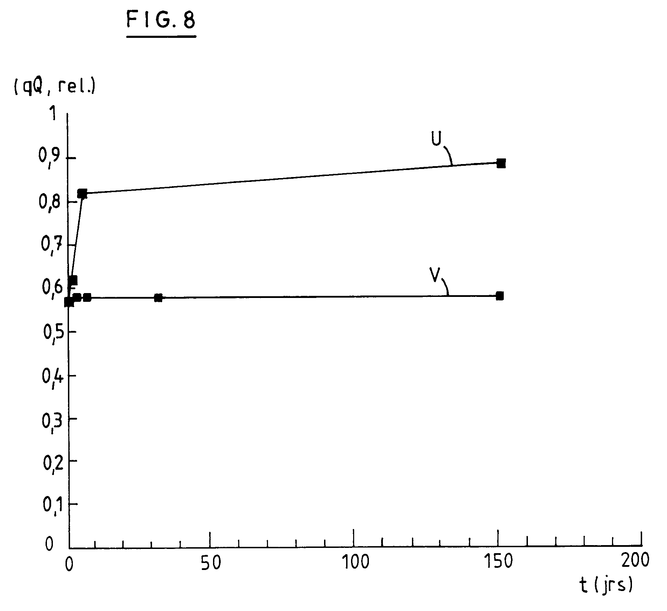

Les résultats sont représentés sous forme de graphique à la figure 8. L'essai témoin représenté par la ligne V révèle une fluorescence modulée relativement constante, tandis que l'essai relatif à des échantillons de jeunes épicéas atteints par les "pluies acides" et traités par une solution de carbonate acide de magnésium est représentée par la ligne U. La ligne E montre un rétablissement de l'activité photosynthétique sept jours après le traitement à l'aide de ladite solution. Visuellement, les aiguilles des arbres traités retrouvent une couleur vert foncé après seulement quatre jours. Ceci indique que dans le cas des aiguilles de sapins la pénétration du magnésium sous forme "$Mg(HCO_3)_2$" est très rapide. Après quatre mois du traitement on a constaté la production de jeunes pousses et au cinquième mois ces pousses ont atteint une longueur de 10 à 15 cm. Ceci indique un rétablissement spectaculaire et effectif de ces jeunes sapins alors que les arbres témoins n'ont pas formé de pousses ou ont formé des pousses extrêmement courtes qui n'ont guère dépassé 1 cm de long et qui ont rapidement pris une couleur jaune.

## II. ESSAIS COMPARATIFS DE PLEIN CHAMPS

Les résultats des essais comparatifs suivants sont exprimés sous forme de tableaux.

1) Essais sur froment d'hiver (variété Camp Rémy) effectués à Liberchies

| Caractéristiques du sol : | | |
|---|---|---|
| Teneur en P (mg/100 g) | 11 | élevé |
| Teneur en K (mg/100 g) | 11 | moyen |
| Teneur en Mg (mg/100 g) | 8,3 | moyen |
| Teneur en Ca (mg/100 g) | 245 | très élevé |
| Teneur en C (%) | 0,61 | faible |
| Teneur en N (%) | 0,113 | |
| Teneur en Fe (ppm) | 105 | moyen |
| Teneur en Cu (ppm) | 3,9 | moyen |
| Teneur en Mn (ppm) | 37 | faible |
| Teneur en Zn (ppm) | 7 | moyen |
| pH KCl | 7,7 | élevé |

Les essais sont répétés quatre fois. L'essai n° 1 se rapporte à des plantes-témoins en absence de toute pulvérisation foliaire d'une composition de carbonate acide de magnésium.

L'essai n° 2 est relatif à des plantes traitées par pulvérisation foliaire d'une composition acide de magnésium à raison de 3 kg Mg/ha (soit 5 litres d'une solution aqueuse contenant 25 g/l de $Mg(HCO_3)_2$ ou 7,15 g/l de magnésium par parcelle élémentaire de 120 m$^2$).

Le traitement a été effectué au stade dernière feuille de manière à prolonger et stimuler l'activité photosynthétique et assurer un meilleur remplissage du grain en absence de phénomènes d'échaudage.

| Résultats expérimentaux : | | | | | | |
|---|---|---|---|---|---|---|
| | Traitement | Rendement à 14 % d'humidité | | Poids spécifique du froment | | Gain/témoin kg/ha |
| | | kg/ha | % témoin | kg/hl | % témoin | |
| Essai n° 1 | Témoin 1 | 8260 | | 76,8 | | |
| | 2 | 7980 | | 73,3 | | |
| | 3 | 7870 | | 76,0 | | |
| | 4 | 8460 | | 74,9 | | |
| | Moyenne | 8143 | 100,0 | 75,3 | 100,0 | 0 |
| | Ecart-type | 268 | | 1,5 | | |
| Essai n° 2 | Mg (HCO$_3$)$_2$ 1 | 8330 | | 74,1 | | |
| | 2 | 8520 | | 76,2 | | |
| | 3 | 8410 | | 74,2 | | |
| | 4 | 8670 | | 76,5 | | |
| | Moyenne | 8483 | 104,2 | 75,3 | 100,0 | 340 |
| | Ecart-type | 147 | | 1,3 | | |

- Appliqué au stade dernière feuille l'augmentation de rendement, suite à l'apport de Mg(HCO$_3$)$_2$, est de 4,2 % - soit un gain par rapport au témoin de 340 kg/ha.
- L'analyse de la variance à 2 critères nous montre :
    1) une absence d'effet bloc,
    2) un effet traitement probablement significatif (le risque d'erreur de première espèce a est de 6 %)
- L'augmentation des rendements s'est faite sans perte de poids spécifique.

2) Essais relatifs à la culture de pommes de terre (variété Bintje) à Frasne-lez-Anvaing (Arc-Ainières)

Traitements expérimentaux

Les essais sont effectués à quatre reprises.
L'essai n° 1 se rapporte à des plantes-témoins sans pulvérisation foliaire d'une composition de carbonate acide de magnésium. L'essai n° 2 est relatif à des plants de pommes de terre traités par pulvérisation foliaire d'une composition de carbonate acide de magnésium à raison de 3,5 kg Mg/ha (soit 6 litres d'une solution aqueuse contenant 25 g/l de Mg (HCO$_3$)$_2$ ou 7,15 g/l de magnésium par parcelle élémentaire de 120 m$^2$). L'apport est réalisé au stade élongation des tiges.

| Résultats expérimentaux : | | | | | | |
|---|---|---|---|---|---|---|
| Traitement | Rendement tout-venant $10^3$. | | Pourcentage M.S. | | Rendement en M.S. | |
| | kg/ha | % témoin | (%) | % témoin | kg/ha | % témoin |
| Essai 1 | | | | | | |
| Témoin 1 | 58,82 | | 16,9 | | 9941 | |
| 2 | 68,34 | | 16,8 | | 11451 | |
| 3 | 65,28 | | 18,7 | | 12207 | |
| 4 | 78,16 | | 18,6 | | 14166 | |
| Moyenne | 67,15 | 100,0 | 17,8 | 100,0 | 11949 | 100,0 |
| Ecart-type | 7,20 | | | | 1757 | |
| Essai 2 | | | | | | |
| Mg $(HCO_3)_2$ 1 | 66,30 | | 18,5 | | 12266 | |
| 2 | 81,94 | | 18,5 | | 15159 | |
| 3 | 65,62 | | 17,9 | | 11746 | |
| 4 | 82,62 | | 18,4 | | 15202 | |
| Moyenne | 74,12 | 110,4 | 18,3 | 103,3 | 13593 | 113,8 |
| Ecart-type | 9,43 | | | | 1756 | |

Une seule application de carbonate acide de magnésium au stade de pleine croissance du végétal a entraîné une augmentation du rendement tout-venant de 10,4 % - soit un gain par rapport au témoin de 6,97 $10^3$ kg/ha.

Une analyse de la variance à deux critères a montré :

1) l'existence d'un effet bloc probablement significatif ($\alpha$ = 6 %),

2) l'existence d'un effet traitement probablement significatif ($\alpha$ = 8 %).

L'augmentation du pourcentage de matière sèche (M.S.) par rapport au témoin est de 3,3 % ceci est intéressant si la production est destinée à une transformation industrielle.

L'augmentation de rendement en matière sèche est de 13,8 % par rapport au témoin non traité.

3) Essais relatifs à la culture du maïs fourrage (variété KEO à Frasnes-lez-Anvaing (Arc-Ainières)

Traitements expérimentaux

Les essais sont répétés quatre fois. L'essai n° 1 se rapporte à des plantes-témoins de maïs, en absence de toute pulvérisation foliaire d'une composition de carbonate acide de magnésium.

L'essai n° 2 est relatif à des plantes de maïs traitées par pulvérisation foliaire d'une composition de carbonate acide de magnésium à raison de 3,5 kg Mg/ha (soit 6 litres d'une solution aqueuse contenant 25 g/l de Mg$(HCO_3)_2$ ou 7,15 g/l de Mg par parcelle élémentaire de 120 m$^2$).

L'application a été effectuée au stade 5-6 feuilles au moment où la jeune plante entame sa pleine période de croissance. Il est évident qu'à ce stade, l'interception par le feuillage n'est pas optimale et qu'une partie non négligeable du produit tombe sur le sol.

La parcelle est contiguë à la parcelle plantée de pommes de terre, qui fait l'objet des essais repris sous 2) ci-dessus. Les teneurs en éléments nutritifs échangeables et le pH sont en ordre et aucune carence magnésienne d'origine pédologique n'a été mise en évidence.

| Résultats expérimentaux | | | | | | |
|---|---|---|---|---|---|---|
| Traitement | Rendement matière verte $10^3$ | | Matière sèche | | Rendement matière sèche | |
| | kg/ha | % témoin | (%) | % témoin | kg/ha | % témoin |
| Essai 1 | | | | | | |
| Témoin 1 | 78,75 | | 18,3 | | 14441 | |
| 2 | 71,75 | | 17,5 | | 12556 | |
| 3 | 89,25 | | 18,7 | | 16690 | |
| 4 | 86,62 | | 18,7 | | 16198 | |
| Moyenne | 81,59 | 100,0 | 18,3 | 100,0 | 14971 | 100,0 |
| Ecart-type | 4,85 | | | | 821 | |
| Essai 2 | | | | | | |
| Mg (HCO$_3$)$_2$ 1 | 81,38 | | 18,7 | | 15218 | |
| 2 | 75,25 | | 19,5 | | 14674 | |
| 3 | 86,63 | | 18,6 | | 16113 | |
| 4 | 83,85 | | 19,6 | | 16435 | |
| Moyenne | 81,78 | 100,2 | 19,1 | 104,4 | 15610 | 104,3 |
| Ecart-type | 7,93 | | | | 821 | |

S'il n'y a pas de différence significative pour les productions de matière verte, une différence probablement significative au niveau du pourcentage de matière sèche ($\alpha$ = 7 %) entraîne une augmentation probablement significative du rendement en matière sèche ($\alpha$ = 9 %) de 4,3 % par rapport au témoin, soit 639 kg de matière sèche à l'hectare.

Le pourcentage de matière sèche plus élevé laisse préjuger d'une meilleure valeur protéique et énergétique de la production.

On observe également une augmentation des teneurs en magnésie du fourrage, alors que celui-ci est bien souvent déficitaire en cet élément.

4) Essais relatifs à la culture de la betterave sucrière (variété Allyx) à Frasnes-lez-Anvaing (Montroeulau-Bois) :

| Caractéristiques du sol : | | |
|---|---|---|
| Teneur en P (mg/100 g) | 12 | élevé |
| Teneur en K (mg/100 g) | 17 | élevé |
| Teneur en Mg (mg/100 g) | 5,1 | faible |
| Teneur en Ca (mg/100 g) | 350 | très élevé |
| Teneur en C (%) | 1,15 | moyen |
| Teneur en M (%) | 0,089 | |
| Teneur en Fe (ppm) | 115 | moyen |
| Teneur en Cu (ppm) | 3,6 | moyen |
| Teneur en Mn (ppm) | 36 | faible |
| Teneur en Zn (ppm) | 10 | moyen |
| pH KCl | 7,6 | élevé |

Traitements expérimentaux :

Les essais sont effectués sans répétition. L'essai n° 1 est relatif à des plantes-témoins en absence de toute pulvérisation d'une composition de carbonate acide de magnésium. Les essais n° 2, 3 et 4 sont relatifs à des plantes de betteraves sucrières soumises respectivement à une, deux et trois pulvérisations foliaires d'une composition de carbonate acide de magnésium.

La dose de magnésium est théorique. Le produit est appliqué à l'état pur sans tenir compte du pourcentage de précipitation. L'application est effectuée au stade 10-12 feuilles avant la couverture.

EP 0 474 649 B1

| Résultats expérimentaux | | | | | | |
|---|---|---|---|---|---|---|
| Dose kg Mg/ha | Rendement racines | | Richesse en sucre | | Rendement sucre | |
| | T/ha | % témoin | (%) | % témoin | kg/ha | % témoin |
| Essai 1 | | | | | | |
| 0 kg/ha | 58,28 | 100,0 | 16,1 | 100,0 | 9382 | 100,0 |
| Essai 2 | | | | | | |
| 1 kg/ha | 55,13 | 94,6 | 16,3 | 101,2 | 8936 | 95,8 |
| Essai 3 | | | | | | |
| 2 kg/ha | 60,30 | 103,5 | 16,2 | 100,6 | 9769 | 104,1 |
| Essai 4 | | | | | | |
| 3 kg/ha | 72,00 | 123,5 | 16,5 | 102,5 | 11880 | 126,6 |

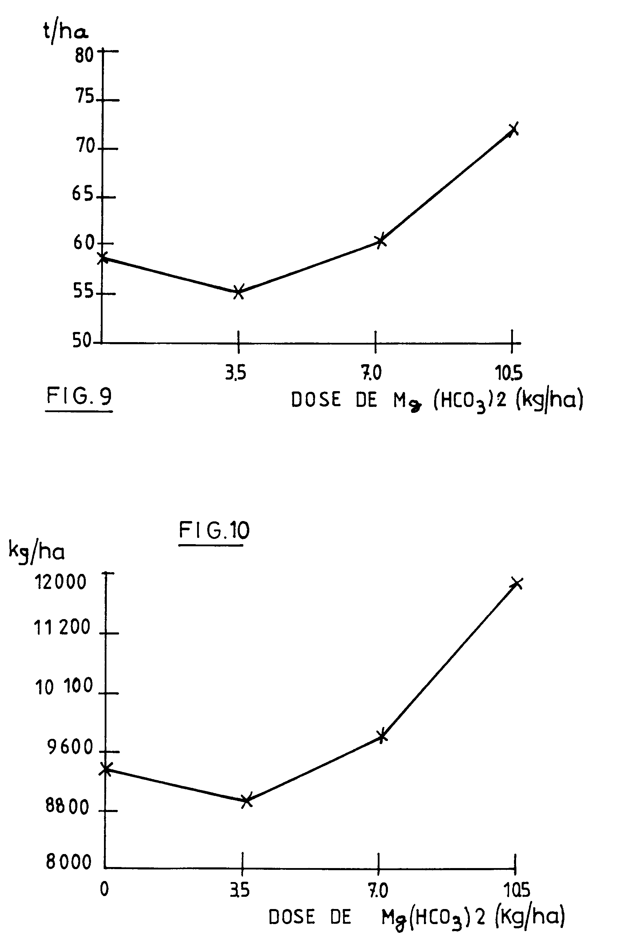

Le rendement racine subit à la faible dose d'application un effet dépressif probablement non significatif par rapport au témoin. Ce n'est qu'à partir d'une certaine dose que les différences se marquent et surtout à 10,5 kg $Mg(HCO_3)_2$/ha, correspondant à 3 kg Mg/ha, avec une augmentation substantielle de 23,5 %. La figure 9 illustre l'évolution du rendement racines en fonction de la dose de magnésium appliquée sous forme de $Mg(HCO_3)_2$.

La figure 10 montre que le rendement en sucre à l'hectare augmente en fonction de l'application de doses croissantes de produit. Ce rendement en sucre/ha subit une augmentation meilleure encore que pour le rendement racines : 26,6 % à la dose d'application de 10,5 kg $Mg(HCO_3)_2$/ha (dose théorique de 3 Kg Mg/ha).

Les études physiologiques effectuées en laboratoire confirment une action extrêmement rapide de la composition contenant du carbonate acide de magnésium sur des plantes carencées. Ils confirment aussi un rétablissement total de l'activité photosynthétique après seulement quatre à six jours du traitement, aussi bien pour le mais, le froment et les jeunes épicéas.

L'action à long terme du carbonate acide de magnésium se confirme par le fait que les jeunes épicéas ont retrouvé et gardé une activité normale même après cinq mois du traitement. Mais pour les plantes ligneuses, il faut un temps beaucoup plus long pour juger de la guérison totale, probablement deux à trois ans.

Les études agronomiques orientatives effectuées en champ sur le blé d'hiver, la pomme de terre, le mais fourrager et la betterave sucrière ont montré que le $Mg(HCO_3)_2$ est un produit qui, mis au point de façon optimale et bien "ciblé" phytotechniquement, offre des perspectives de valorisation agronomique importantes.

La présente invention est aussi relative à un procédé pour préparer extemporanément on traitement une composition pour le traitement de végétaux contenant une solution aqueuse de carbonate acide de magnésium $Mg(HCO_3)_2$.

Suivant ce procédé, on mélange dans un réacteur à de l'eau de l'oxyde de magnésium pur de grande réactivité vis à vis de l'anhydride carbonique gazeux, de manière à obtenir une suspension et on traite la suspension ainsi obtenue avec de l'anhydride carbonique gazeux sous pression, à une température inférieure à 40°C, de préférence à une température d'environ 10°C et sous une pression partielle en anhydride carbonique supérieure à $5.10^5$ Pascals (5 bars).

Cette étape du procédé s'apparente à un procédé décrit dans le document WO-A-8 403 490 relatif à la préparation du carbonate de magnésium trihydraté et du carbonate de magnésium basique. Cependant, au lieu d'utiliser comme matière première, la magnésite peu réactive, obtenue par calcination à haute température, c'est-à-dire au-delà de 800°C, on utilise dans le procédé selon l'invention, de l'oxyde de magnésium pur artificiel, obtenu sous forme d'une poudre finement divisée présentant une grande réactivité vis à vis du $CO_2$ et une surface spécifique BET comprise entre 80 et 200 $m^2$/g et un diamètre moyen de particules de 1 à 20 microns, par calcination à environ 600°C d'hydromagnésite exempte de calcium et de fer ou par calcination d'hydroxyde de magnésium à environ 450°C.

On mélange l'oxyde de magnésium à l'eau et on traite la suspension ainsi obtenue avec du $CO_2$ gazeux injecté dans le ciel d'un réacteur.

14

On maintient le réacteur à une pression en anhydride carbonique supérieure à $5.10^5$ Pascals (5 bars) en alimentant la phase gazeuse du réacteur en anhydride carbonique.

Contrairement aux procédés connus, on dilue le produit de réaction avec de l'eau, pour éviter toute précipitation intempestive du carbonate basique de magnésium, de manière à obtenir une solution diluée contenant moins de 80 g/l de carbonate de magnésium, de préférence environ 20 g/l environ de carbonate de magnésium.

La seconde étape du procédé consiste à détendre à la pression atmosphérique la solution aqueuse de $Mg(HCO_3)_2$ diluée. Cette dilution a pour résultat de présenter la composition sous une forme et une concentration adéquates permettant son utilisation immédiate en tant qu'activateur de l'activité photosynthétique de végétaux par simple pulvérisation sur ceux-ci.

Ce procédé suivant l'invention met en oeuvre de l'oxyde de magnésium de granulométrie inférieure à 20 microns, de préférence des grains d'environ 10 microns.

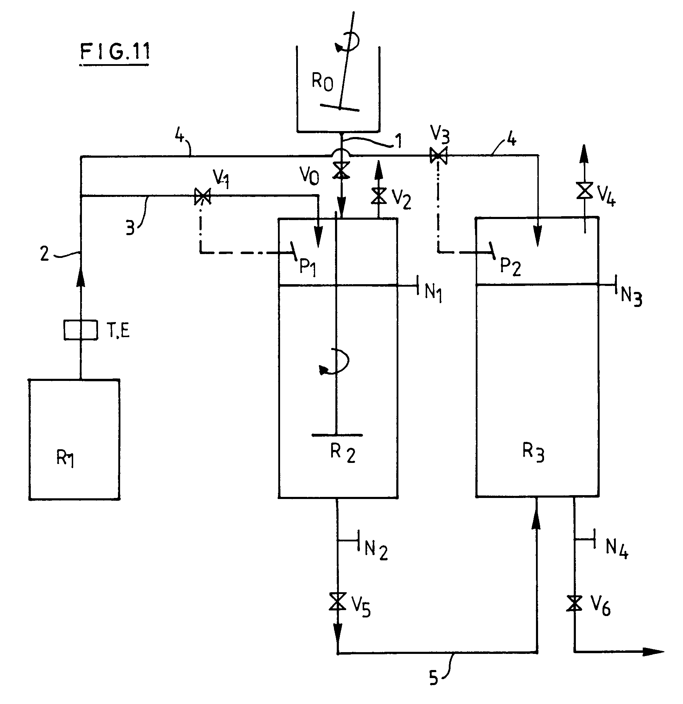

Un appareillage approprié pour la préparation d'une solution de carbonate acide de magnésium selon l'invention de manière discontinue par charges successives est représenté schématiquement à la figure 11. Cet appareillage comprend une cuve $R_0$ destinée à disperser de l'oxyde de magnésium finement broyé en suspension dans de l'eau, un réservoir $R_1$ d'anhydride carbonique pur sous pression de $20.10^5$ Pascals (20 bars), un réacteur principal $R_2$ muni d'un agitateur énergique pour assurer l'absorption de l'anhydride carbonique et la transformation de l'oxyde de magnésium en carbonate acide de magnésium à l'état dissous et enfin un réacteur de transfert $R_3$ relié au réservoir $R_1$ et au réacteur principal $R_2$. Chacun des réacteurs $R_2$, $R_3$ comporte des détecteurs du niveau de remplissage $N_1$, $N_2$, $N_3$, $N_4$ et des dispositifs de mesure $P_1$, $P_2$ de la pression régnant dans ceux-ci.

Des vannes pneumatiques commandées séparément permettent d'effectuer au moment opportun diverses séquences d'opération constituant un cycle de fabrication. Le schéma opératoire est le suivant :

1. Remplissage du réacteur principal $R_2$ :

Mise en suspension dans l'eau de l'oxyde de magnésium et remplissage du réacteur R2 jusqu'au niveau N1. Dès que le niveau N1 est atteint, le détecteur de niveau commande la fermeture de la vanne Vo, l'ouverture de la vanne V1 (par mise en service du transmetteur P1) et la mise en route de l'agitateur. Les autres vannes $V_2$ à $V_6$ sont maintenues fermées.

2. Réaction proprement dite :

$Mg(OH)_2$ + $2CO_2$ --- $Mg(HCO_3)_2$

Dès que la pression en $CO_2$ atteint $5.10^5$ Pascals (5 bars) dans le ciel du réacteur principal $R_2$, un transmetteur de pression P1 assure la fermeture de la vanne V1 (la vanne V1 se ferme à 5 bars et s'ouvre à 4,8 bars, elle travaille en tout ou rien).

3. Vidange du réacteur :

Après une période de temporisation de 15 minutes environ sous une pression de $5.10^5$ Pascals (5 bars), le réacteur R2 se met en transfert. La suspension résiduelle en $CO_2$ dans le réacteur principal $R_2$ permet de refouler la solution aqueuse de carbonate de magnésium vers le réacteur de transfert $R_3$.

Dans ce but, le réacteur principal $R_2$ est relié à un réacteur de transfert $R_3$ par un conduit 5 situé au voisinage de sa partie inférieure et le réacteur de transfert $R_3$ est une enceinte fermée munie à sa partie supérieure d'un conduit 4 d'amenée d'anhydride carbonique gazeux de manière à mettre cette enceinte sous pression par le haut.

L'enceinte est avantageusement munie d'un évent $V_4$ et de moyens $V_2$, $P_3$ et $N_3$ destinés à la régulation de la pression régnant dans l'enceinte et du niveau de liquide dans l'enceinte.

**Revendications**

**1.** Procédé de traitement foliaire de végétaux chlorophylliens à l'aide d'acide carbonique et/ou d'un dérivé magnésien, caractérisé en ce qu'on met en contact des parties foliées desdits végétaux avec une solution aqueuse de carbonate acide de magnésium de formule $Mg(HCO_3)_2$, en vue de stimuler et/ou rénover l'activité photosynthétique desdits végétaux.

15

2. Procédé de traitement selon la revendication 1, caractérisé en ce qu'on traite les végétaux par pulvérisation à l'aide d'une solution aqueuse de carbonate acide de magnésium contenant moins de 80 g/l de carbonate de magnésium de formule $Mg(HCO_3)_2$.

3. Procédé de traitement selon la revendication 1 ou 2, comprenant la préparation extemporanée de ladite solution par :
   - mélange dans un réacteur d'eau et d'oxyde de magnésium pur artificiel, présentant une grande réactivité vis-à-vis du $CO_2$, de manière à obtenir une suspension aqueuse d'oxyde de magnésium partiellement hydratée que l'on traite avec de l'anhydride carbonique gazeux à une température inférieure ou égale à 40°C et sous une pression partielle en anhydride carbonique supérieure à $5.10^5$ Pa (5 bars) de manière à obtenir du carbonate acide de magnésium de formule $Mg(HCO_3)_2$;
   - dilution dans le réacteur ou dans le dispositif de pulvérisation, du produit de réaction dans de l'eau, de manière à obtenir une solution aqueuse diluée contenant moins de 80 g/l de carbonate acide de magnésium; et
   - détente à la pression atmosphérique de ladite solution aqueuse diluée au moment même du traitement foliaire.

4. Utilisation d'une solution aqueuse mise en oeuvre par le procédé selon la revendication 1 ou 2, caractérisée en ce que la solution contient environ 20 g/l de carbonate acide de magnésium.

5. Utilisation d'une solution aqueuse mise en oeuvre par le procédé selon la revendication 1 ou 2, pour stimuler la croissance des végétaux.

6. Utilisation d'une solution aqueuse mise en oeuvre par le procédé selon la revendication 1 ou 2, pour le traitement curatif de végétaux atteints de carence magnésienne.

7. Utilisation d'une solution aqueuse mise en oeuvre par le procédé selon la revendication 1 ou 2 comme agent de fertilisation magnésienne de complément.

**Claims**

1. Process for foliar treatment of chlorophyll containing plants using carbonic acid and/or a magnesium derivative, characterized in that the leafy parts of the said plants are put into contact with an aqueous solution of magnesium bicarbonate having the formula $Mg(HCO_3)_2$, with a view to stimulating and/or restoring the photosynthetic activity of the said plants.

2. Treatment process according to Claim 1, characterized in that the plants are treated by spraying with an aqueous solution of magnesium bicarbonate containing less than 80 g/l of magnesium bicarbonate having the formula $Mg(HCO_3)_2$.

3. Treatment process according to Claim 1 or 2, comprising the extemporaneous preparation of the said solution by :
   - mixing water and pure synthetic magnesium oxide, exhibiting high reactivity to $CO_2$, in a reactor, so as to obtain an aqueous suspension of partially hydrated magnesium oxide which is treated with gaseous carbon dioxide at a temperature of less than or equal to 40°C and under a partial pressure of carbon dioxide greater than $5 \times 10^5$ Pa(5 bars) so as to obtain magnesium bicarbonate having the formula $Mg(HCO_3)_2$;
   - diluting the reaction product with water in the reactor or in the spraying device, so as to obtain a dilute aqueous solution containing less than 80 g/l of magnesium bicarbonate; and
   - reducing the pressure of the said dilute aqueous solution to atmospheric pressure at the actual moment of foliar treatment.

4. Use of an aqueous solution by means of the process according to Claim 1 or 2, characterized in that the solution contains approximately 20 g/l of magnesium bicarbonate.

5. Use of an aqueous solution by means of the process according to Claim 1 or 2, for stimulating plant growth.

16

6. Use of an aqueous solution by means of the process according to Claim 1 or 2, for the curative treatment of plants affected by magnesium deficiency.

7. Use of an aqueous solution by means of the process according to Claim 1 or 2, as a supplementary magnesium fertilizing agent.

**Patentansprüche**

1. Verfahren zur blattständigen Behandlung von chlorophyllhaltigen Pflanzen mittels Kohlensäure und/oder einem Magnesiumabkömmling, dadurch gekennzeichnet, daß man beblätterte Teile der genannten Pflanzen mit einer wässrigen Lösung von saurem Magnesiumcarbonat der Formel $Mg(HCo_3)_2$ in Kontakt bringt im Hinblick auf eine Anregung und/oder Erneuerung der photosynthetischen Aktivität der Pflanzen.

2. Verfahren zur Behandlung nach Anspruch 1, dadurch gekennzeichnet, daß man die Pflanzen durch Besprühen mit einer wässrigen Lösung von saurem Magnesiumcarbonat behandelt, die weniger als 80 g/l Magnesiumcarbonat der Formel $Mg(HCO_3)_2$ enthält.

3. Verfahren zur Behandlung nach Anspruch 1 oder 2, welches die Zubereitung auf der Stelle der genannten Lösung umfasst durch:
   - Herstellung einer Mischung in einem Reaktor zwischen Wasser und reinem, künstlichem Magnesiumoxyd, das eine große Reaktivität gegenüber $CO_2$ besitzt, in der Weise, daß eine wässrige Suspension von teilweise hydratisiertem Magnesiumoxyd erhalten wird, die man mit Kohlendioxyd bei einer Temperatur unterhalb oder gleich 40°C und unter einem $CO_2$-Partialdruck oberhalb 5 x $10^5$ pa (5 bar) in der Weise behandelt, daß saures Magnesiumcarbonat der Formel $Mg(HCO_3)_2$ gebildet wird,
   - Verdünnung in dem Reaktor oder in der Sprühvorrichtung des Reaktionsproduktes in Wasser, so daß man eine wässrige verdünnte Lösung erhält, die weniger als 80 g/l saures Magnesiumcarbonat enthält, und
   - Entspannung auf Atmosphärendruck der genannten verdünnten wässrigen Lösung im Augenblick der Blattbehandlung.

4. Verwendung einer nach Anspruch 1 oder 2 hergestellten wässrigen Lösung, dadurch gekennzeichnet, daß die Lösung etwa 20 g/l saures Magnesiumcarbonat enthält.

5. Verwendung einer wässrigen Lösung, hergestellt nach dem Verfahren nach Anspruch 1 oder 2 zur Anregung des Pflanzenwachstums.

6. Verwendung einer wässrigen Lösung, hergestellt nach dem Verfahren nach Anspruch 1 oder 2 zur Heilbehandlung von Pflanzen mit Magnesiummangel.

7. Verwendung einer wässrigen Lösung, hergestellt durch das Verfahren nach Anspruch 1 oder 2 als ergänzendes Mittel zur Magnesiumfertilisation.

FIG. 1

FIG. 2

FIG. 3

# FIG.4

FIG.5

FIG. 6

FIG. 7

FIG. 8

t/ha

FIG. 9

DOSE DE M$_g$ (HCO$_3$)2 (kg/ha)

FIG.10

kg/ha

DOSE DE    M$_g$(HCO$_3$)2 (Kg/ha)

25

FIG.11